# EUROPEAN PATENT APPLICATION

(11) **EP 3 269 864 A1**
(43) Date of publication of application: **17.01.2018**
(21) Application number: 15884329.2
(22) Date of filing: 03.07.2015
(51) Int. Cl.: D06F 33/02

(54) **INTELLIGENT CLOTHING MANAGEMENT DEVICE**

(30) Priority: 10.03.2015 CN 201510104764
(71) Applicant: Qingdao Haier Washing Machine Co., Ltd., Shandong 266101 (CN)
(72) Inventor: SHU, Hai, Qingdao Shandong 266101 (CN); XU, Sheng, Qingdao Shandong 266101 (CN); LI, Yang, Qingdao Shandong 266101 (CN); JI, Chenyu, Qingdao Shandong 266101 (CN); WANG, Shuchun, Qingdao Shandong 266101 (CN); LI, Yan, Qingdao Shandong 266101 (CN); YIN, Junming, Qingdao Shandong 266101 (CN)
(74) Representative: Ziebig, Marlene
(86) International application number: PCT/CN2015/083304
(87) International publication number: WO 2016/141647

(57) **Abstract**

An intelligent clothing management device comprises a clothing information entry module and a classification module. The clothing information entry module and the classification module are arranged at an intelligent terminal; the clothing information entry module is used to acquire clothing information, and the classification module adds acquired clothing information to categories according to the clothing information acquired by the clothing information entry module. The intelligent clothing management device may manage clothing more reasonably, realizes classification-based management according to various characteristics of clothing, and also provides an intelligent clothing matching function and a recommended washing program, thus bringing convenience to a user.

## Description

### TECHNICAL FIELD

The present disclosure relates to the technical field of clothing management, in particular to an intelligent clothing management device

### BACKGROUND OF THE INVENTION

With the rapid pace of life, the continuous development of society, and constant improvement of people's material living standard, the categories and quantity of clothing people wear are constantly increasing. More and more people in the family want to save time while managing their own clothing, hoping to avoid the problem that it is difficult to find wanted clothes and the problem that people forget purchased clothes and therefore never put them on because there are too many clothes. Even it is possible that people newly purchase clothes they have purchased before, thus casing waste. Moreover, it is also possible that people do not know how to match clothes for different occasions and different reasons because there are too many clothes.

### SUMMARY OF THE INVENTION

The problem to be solved by the present disclosure is to solve the deficiency in the prior art and provide an intelligent clothing management device to improve intelligentization of clothing management of users. The device may manage clothing more reasonably, realizes classification-based management according to various characteristics of clothing, and also provides an intelligent clothing matching function and a recommended washing program, thus bringing more convenience to a user, getting close to user's life and improving the quality of life.

The present disclosure provides an intelligent clothing management device, at least comprising a clothing information entry module and a classification module, wherein the clothing information entry module and the classification module are arranged on an intelligent terminal. The clothing information entry module is used to acquire clothing information, and the classification module adds acquired clothing information to categories according to the clothing information acquired by the clothing information entry module.

Preferably, the clothing information entry module acquires the clothing information in one of manners including manual inputting, scanning bar code of clothing, scanning QR code of clothing, scanning label of clothing, and inputting by taking a photo to identify clothing information.

Preferably, the classification module at least comprises clothing categories and clothing information, and the clothing categories at least include categories classified according to wearing parts, and the clothing information includes a clothing number, a clothing name, and a clothing color.

Preferably, the clothing categories further include categories classified according to clothing material, and the classification according to clothing material is based on a dominant material component of the clothing.

Preferably, the clothing categories further include categories classified according to the color of clothing, the color of clothing includes single color and multicolor, and when the color of clothing is multicolor, the clothing is classified according to a dominant color of the clothing.

Preferably, the clothing categories also include categories classified according to seasons, and the classification by seasons at least includes classification by summer and winter.

Preferably, a washing module is further provided. The washing module takes a category from the classification module, selects clothing in the category, and recommends preferred washing parameters according to the selected clothing. Or washing parameters suitable for clothing are selected manually according to the clothing information of the selected clothing; and then the washing module is in communication connection with washing equipment to further control the washing equipment, and the washing module is arranged on an intelligent module.

Preferably, an intelligent matching module is further provided for recommending clothing according to a selected occasion and/or the weather conditions of the day, and/or recommending clothing matched with the primary clothing according to primary clothing selected from a clothing module by a user. The intelligent matching module is arranged on an intelligent terminal.

Preferably, a waste basket is also provided for deleting clothing in categories in the classification module. The waste basket is arranged on an intelligent terminal.

Preferably, the clothing information further comprises clothing material, clothing pictures, purchase time, washing time, and clothing care methods.

Preferably, the intelligent matching module further comprises, based on the primary clothing selected by the user, recommending clothing matched with the primary clothing from the Internet and linking an address, and then the user may purchase the clothing by clicking on the address.

By use of the solution of the present disclosure, not only may the management of clothing be facilitated, but also an intelligent clothing matching function through the device according to different weather and different occasions is provided to the user. The user also may first select one piece of clothing from clothing stored in the device and then the device may recommend, according to the primary clothing selected by the user, clothing matched with the selected clothing for the user to select. Further, the device further comprises a washing management function for performing further analysis according to the condition of user's selection of clothing in a category to recommend a more appropriate washing procedure.

### BRIEF DESCRIPTION OF THE DRAWINGS

FIG.1 is a structure block diagram of a main operation menu page of an intelligent clothing management device according to an embodiment of the present disclosure;
FIG.2 is a structure block diagram of a menu page of a classification module according to an embodiment of the present disclosure; and
FIG.3 is a flow chart of recommending a washing procedure based on selected clothing according to an embodiment of the present disclosure.

### DETAILED DESCRIPTION OF THE EMBODIMENTS

With the continuous improvement of people's living standards, the quantity and categories of clothing are constantly increasing, and the management of clothing must also be an important part of people's life. For this reason, the intelligent clothing management device provided by the present disclosure enhances more practicability and convenience of the management of clothing, and users may check the detailed information of all the clothing at any time. It also includes that a user may enter the relevant information of newly purchased clothes into the device when the new clothes are purchased and also include a situation that the clothes that the user wants to throw away may also be deleted from the device, thus improving the intelligent level of clothing management.

The present disclosure will be described below in detail with reference to accompanying drawings and embodiments.

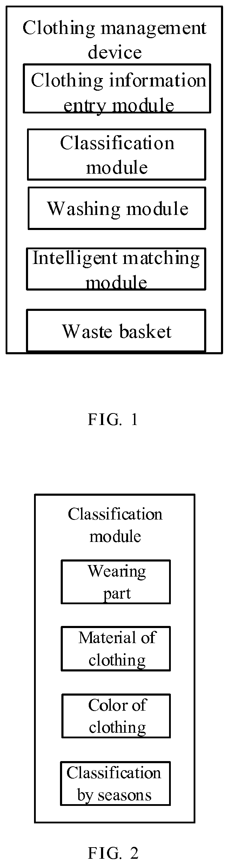

As shown in FIG.1, the present disclosure provides an intelligent clothing management device, comprising a clothing information entry module and a classification module. The clothing management device is arranged on an intelligent terminal. The clothing information entry module acquires clothing information in one of manners such as manual inputting, scanning bar codes of clothing, scanning two-dimensional codes of clothing, scanning labels of clothing, and taking a photo to identify clothing information. The clothing information entry module is used for acquiring clothing information, including acquiring clothing information when a user purchases new clothes. The classification module adds acquired clothing information to categories according to the clothing information acquired by the clothing information entry module. The classification module at least comprises clothing categories and clothing information, and the clothing categories at least include categories classified according to wearing parts, and the clothing information includes a clothing material, a clothing color, a clothing name, a clothing number, pictures, purchase time, and washing time. The clothing categories further include categories classified according to clothing material, and the classification according to clothing material is based on the dominant material component of the clothing. The clothing categories further include categories classified according to the color of clothing, the color of clothing includes single color and multicolor, and when the color of clothing is multicolored, the clothing is classified according to the dominant color of the clothing. The clothing categories also include categories classified according to seasons, and the classification by seasons at least includes classification by summer and winter.

The clothing management device further comprises a washing module, an intelligent matching module and a waste basket. The washing module takes a category from the classification module, selects clothing in the category, and recommends preferred washing parameters according to the selected clothing. Or washing parameters suitable for the clothing are selected manually according to the clothing information of the selected clothing; and then the washing module is in communication connection with washing equipment to further control the washing equipment. The intelligent matching module is further provided for recommending clothing according to a selected occasion and/or a selected season and/or the weather conditions of the day, and/or recommending clothing matched with the primary clothing according to primary clothing selected by a user. The intelligent matching module further comprises, based on the primary clothing selected by the user, recommending clothing matched with the primary clothing from the Internet and linking an address, and then the user may purchase the clothing by clicking on the address. The waste basket is provided for deleting clothing in categories in the classification module.

In the present embodiment, when the clothing information is acquired in a manual manner, information of clothing is entered according to corresponding items through an operation page displayed by the device. Information is acquired slowly in this way because the information needs to be entered manually according to prompt contents. However, this entry manner is flexible and a user may enter required information, at least including a clothing number, according to habits and it is not necessary to enter all information. Moreover, for clothing which is not newly purchased, when clothing labels and such as storing clothing information are not available, the manual inputting manner is more appropriate. When the clothing information is acquired in the manner of scanning bar codes of clothing or scanning two-dimensional codes of clothing or scanning labels of clothing or inputting by taking a photo to identify clothing information, identification equipment for the above-mentioned three scanning manners may use the scanning function (including a camera) of the terminal provided with the device to collect information of bar codes or QR codes or labels on clothing. And the basic information, such as clothing names, clothing colors, clothing material components, and washing instructions, are stored in the bar codes or the QR codes or labels of clothing. Due to use of bar codes or QR codes or labels, with convenient deployment and large information storage capacity, the user may acquire the corresponding information by scanning. After the system collects the information, the system will automatically pop up a clothing number edit box, in which a clothing number is composed of one of letters or numbers or a combination thereof, and the clothing number may be automatically generated by the system or modified manually. The number of each piece of clothing is unique, and if the modified number is the same as the original number during manual modification, the system will pop up a prompt. The user may further supplement other clothing information as needed, including clothing pictures, purchase time, washing time, etc.

After the clothing information is acquired in any one of the above-mentioned manners, when the acquired clothing information is added to categories, the clothing information is added to each category, that is, each category includes relevant information of the clothing, but the corresponding information is saved in accordance with the existence form of each category. As shown in Fig. 2 illustrating a structure block diagram displayed in the menu page of the classification module, the categories classified according to wearing parts include the tops, pants, skirts, shoes, underwear, socks, and others. In the case of classification according to clothing material, the main material, referring to dominant material components in clothing, includes cotton, linen, silk, wool and others. In the case of classification according to the color of clothing, the dominant colors of clothing are taken for classification and include black, white, gray, red, orange, green, blue, indigo, purple. In the case of classification by seasons, the clothing will be classified into categories for the four seasons of spring, summer, autumn and winter.

For example, for one piece of newly purchased clothing, its information at least includes: winter coat, red, cotton 90%. After collecting the information, the system automatically pops up a clothing number edit box, the user may use a clothing number automatically generated by the system as needed, or manually modify the clothing number. Then separately adds it to the category of tops (classified according to the wearing parts), the category of cotton (classified according to clothing material), the category of red (classified according to the colors of clothing), and the category of winter (classified according to seasons) and its clothing number is added to corresponding item under each category in sequence. The user may further add other clothing information as needed. Although the amount of information stored is relatively large, the management becomes more convenient. In the view of clothing under each category, the user may check them as needed, the corresponding quantity of clothing under a sub-category of each category is further counted and thus the quantity of clothing under this sub-category is clear according to the counted quantity.

In particular, the clothes that the user wants to throw away may also be deleted from the device, and the device also comprises a waste basket and the user may first drag into the waste basket the clothes to be thrown away and then delete them. The user may delete the category in any of the categories in which the clothing is located, that is, the user may delete it completely from the device just by deleting it from any of the categories instead of deleting it from all these categories one by one. Since each piece of clothing has a unique clothing number, when it is deleted, the system will automatically delete it from all the categories where the clothing number is located. This makes the management of clothing more intelligent and brings convenience in user operation.

The device also provides an intelligent matching function for recommending matching solutions to the user according to the clothing stored in the device. When the user selects this function, the system may recommend clothing for the user based on weather conditions and climate conditions of the current season. After the user selects an occasion to attend, the system automatically recommends appropriate clothing; occasions to be selected include leisure, banquet, work or entertainment; or after the user selects an occasion to attend and chooses a piece of clothing as primary clothing, the system recommends other clothing matched with the primary clothing for the user according to the primary clothing. When the user attends a special occasion, in a large number of clothes, the user does not know how to select matching, and the function is regarded as a good helper for the user to provide users with intelligent matching. Further, the intelligent matching function also includes recommending the clothing matched with the primary clothing from the Internet according to the user's primary clothing and linking an address and then the user may click on the address to purchase the clothing. As the clothing stored in the device is limited, when the user needs to attend a particularly important occasion, from the existing clothes, the user cannot find a suitable clothing match, through a large number of clothing libraries over the Internet, the user may be quickly and easily recommended with more clothing of suitable styles for matching.

Further, the device further comprises a washing function for automatically recommending washing parameters according to the clothing selected by the user or for manually selecting washing parameters suitable for the selected clothing according to the clothing information of the selected clothing and then the device is in communication connection with washing equipment to further control the washing equipment. The device has stored a large amount of experimental data, including clothing information of clothing, and washing parameters corresponding to one of more than one piece of clothing, so that the most proper washing parameters may be recommended when various types of clothing which are of multiple materials and multiple colors are washed together. Referring to Table 1 below, the table lists the washing parameters corresponding to a part of clothing which correspond to different washing parameters according to the material and other properties of the clothing; the washing parameters include the use amount of a detergent or softener, soaking time, washing time, washing temperature, dewatering time, revolving speed and the like. The users may also manually select washing parameters for the selected clothing according to the usual clothing care habits.

**Table 1 Washing Parameters Corresponding to Clothing**

| Clothing name | Winter jacket | Silk | Wool | Down | Shirt | Chemical fiber | Jeans | Cotton & linen underwear | Labor suit |
|---|---|---|---|---|---|---|---|---|---|
| Wash/Min | 15 | 15 | 20 | 15 | 20 | 15 | 15 | 15 | 75 |
| Rinsing/ times | 2 | 3 | 3 | 3 | 3 | 3 | 3 | 3 | 3 |
| Dewater/Min | 3 | 3 | 3 | 3 | 3 | 3 | 3 | 3 | 3 |
| Temperature/ °C | No | No | No | 30 | 40 | 30 | 30 | 40 | 30 |
| Revolving speed/rpm | Not to dewater | Not to dewater | 600 | 600 | 1000 | 800 | 800 | 1000 | 1000 |

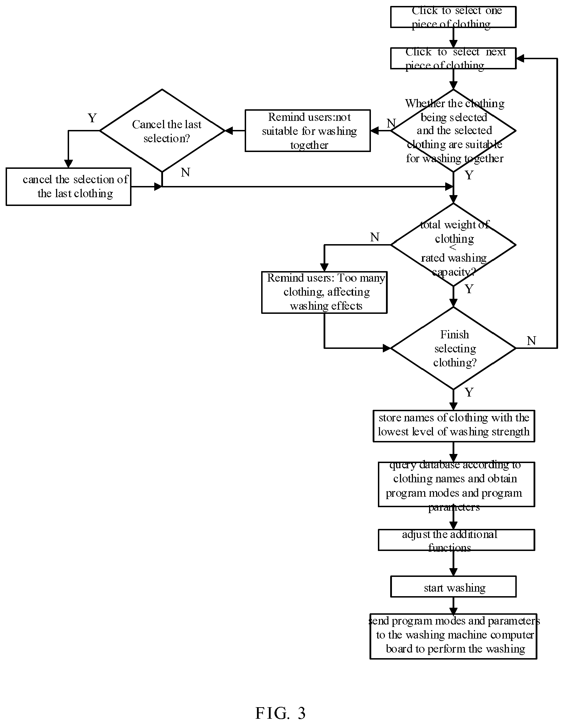

General steps of the washing function of the device will be further described below, as shown in FIG. 3, including:
(1) The washing function module is selected in the main operation menu interface displayed by the device, and then the system enters a category of the classification module and the first piece of clothing in the category is selected as selected clothing.
(2) The next piece of clothing in the displayed category is further selected, and then the system further determines, according to the selected clothing and the clothing selected in step (2), whether they are suitable for being washed together. If they are suitable for being washed together, the system reminds the user and then the user may manually select whether to cancel the clothing selected in this step and then it goes to step 3; otherwise, the step (3) is performed.
   When the selected next piece of clothing and the previously selected clothing are in the same category, the selection of clothing is finished at the end of this selection of clothing and all selected clothing are suitable for being washed together in term of color, the system directly recommends washing parameters for this category; referring to a comparison table of washing parameters of clothing as shown in Table 1. For example, the selected clothing is a denim jacket, the next piece of clothing to be selected is jeans, the washing parameters recommended by the system at least are: the number of rinsing times: twice; dewatering time: 3 minutes; temperature: 30 °C; washing time: 15 minutes.
   When the selected next piece of clothing and the previously selected clothing are not in the same category, the system determines whether the clothing selected by the user is suitable for being washed together in terms of material and color. For example, underwear is not suitable for being washed together with other clothing, clothing of a light color is not suitable for being washed together with clothing of a dark color. If clothing is not suitable for being washed together, the system may give a prompt, the user may decide, according to the prompt, whether to wash them together; when the user selects to wash clothing of different materials and different colors, this function may recommend the most proper washing procedure for the user by analysis processing so that various types of clothing are prevented from being damaged or deformed when they are washed together. And the clothing is prevented from being mutually colored even some of them are prone to fade; therefore, the user is provided with the best washing care solution and more convenience.
(3) The system analyzes whether the total weight of the selected clothing is less than a rated washing weight; if the total weight of the selected clothing is not less than the rated washing weight, then the system reminds the user, and the user may choose whether to finish the selection of clothing according to the reminder. Or if the total weight of the selected clothing is less than the rated washing weight, the user may choose whether to finish the selection of clothing as needed; if the user chooses to finish the selection of clothing, then step (4) is performed; otherwise, the step (2) is performed.
   The system has set a mass corresponding to each piece of clothing in the system, the total weight of selected clothing may be acquired according to the accumulative weight of clothing selected by the user and the total weight is further compared with the rated washing weight so as to make a determination.
(4) The system starts the intelligent calculation according to the selected clothing and acquires washing parameters according to a clothing name inquiring database, wherein the washing parameters include washing time, washing temperature, the number of rinsing times, dewatering time, revolving speed for dewatering. And one or a combination of drying, detergent and softer in additional functions is selected; and
(5) The start item is clicked, and then the system sends the washing parameters to an intelligent washing machine to perform the corresponding operation.

With adoption of the solution provided by the present disclosure, clothing may be managed very well to bring convenience, and moreover it is possible to provide a function of intelligent clothing matching for users by the device according to different weather and different occasions. The device further comprises a washing management function for recommending a more proper washing procedure through the further analysis processing according to the condition of clothing under a category selected by a user.

The implementations of the above-described embodiments may be further combined or replaced, and the embodiments are merely illustrative of the preferred embodiments of the present disclosure and are not intended to limit the concept and scope of the present disclosure. Various changes and modifications to the technical solutions of the present disclosure made by those skilled in the art are all included within the scope of protection of the present disclosure without departing from the inventive concept of the disclosure.

## Claims

1. An intelligent clothing management device, at least comprising a clothing information entry module and a classification module, wherein the clothing information entry module and the classification module are arranged on an intelligent terminal, the clothing information entry module is used to acquire clothing information, and the classification module adds acquired clothing information to categories according to the clothing information acquired by the clothing information recording module.

2. The intelligent clothing management device according to claim 1, wherein the clothing information entry module acquires the clothing information in one of manners including manual inputting, scanning bar codes of clothing, scanning two-dimensional codes of clothing, scanning labels of clothing, and inputting by taking a photo to identify clothing information.

3. The intelligent clothing management device according to claim 1, wherein the classification module at least comprises clothing categories and clothing information,
wherein the clothing categories at least comprise categories classified according to wearing parts, and the clothing information comprises a clothing number, a clothing name, and a clothing color.

4. The intelligent clothing management device according to claim 3, wherein the clothing categories further comprise categories classified according to clothing material, and a classification according to clothing material is based on a dominant material component of the clothing.

5. The intelligent clothing management device according to claim 3, wherein the clothing categories further comprise categories classified according to color of clothing, the color of clothing comprises single-color and multicolor, and when the color of clothing is multicolor, the clothing is classified according to a dominant color of the clothing.

6. The intelligent clothing management device according to claim 3, wherein the clothing categories further comprise categories classified according to seasons, and a classification by seasons at least comprises classification by summer and winter.

7. The intelligent clothing management device according to claim 1, further comprising a washing module, wherein the washing module takes a category from the classification module, selects clothing in the category, and selects preferred washing parameters according to the selected clothing,
or washing parameters suitable for clothing are selected manually according to the clothing information of the selected clothing, and the washing module is in communication connection with a washing equipment to further control the washing equipment, and the washing module is arranged on the intelligent module.

8. The intelligent clothing management device according to claim 1, further comprising an intelligent matching module for recommending clothing according to a selected occasion and/or weather conditions of a day, and/or for recommending clothing matched with a primary clothing according to the primary clothing selected from a clothing module by a user, wherein the intelligent matching module is arranged on the intelligent terminal.

9. The intelligent clothing management device according to claim 1, further comprising a waste basket, wherein the waste basket is used for deleting clothing in categories of the classification module, and the waste basket is arranged on the intelligent terminal.

10. The intelligent clothing management device according to claim 3, wherein the clothing information further comprises clothing materials, pictures, purchase time, washing time, and clothing care methods.

11. The intelligent clothing management device according to claim 8, wherein the intelligent matching module further comprises, based on the primary clothing selected by the user, recommending clothing matched with the primary clothing from the Internet and linking an address, and then the user purchasing the clothing by clicking on the address.
